# EUROPEAN PATENT SPECIFICATION

(11) **EP 2 575 323 B1**
(45) Date of publication and mention of the grant of the patent: **26.08.2015**
(21) Application number: 11183520.3
(22) Date of filing: 30.09.2011
(51) Int. Cl.: H04L 29/08, H04L 29/06

(54) **Delivering content from a server to a client**
Lieferung von Inhalt von einem Server zu einem Kunden
Livraison de contenu à un client depuis un serveur

(43) Date of publication of application: 03.04.2013
(73) Proprietor: Deutsche Telekom AG, 53113 Bonn (DE)
(72) Inventor: Hui, Pan, 10709 Berlin (DE); Petz, Agoston, Austin TX 78723 (US)
(74) Representative: Vossius & Partner Patentanwälte Rechtsanwälte mbB

(56) References cited:
- WO-A2-2007/147101
- US-A1- 2009 088 188
- US-B1- 7 664 875

## Description

### Technical Field

The present invention relates to a preferably computer-implemented method of delivering content from a server to a client and more particularly to an accordingly arranged server, an accordingly arranged client as well as computer programs for implementing such a server or such a client.

### Background Art

Largely due to increasing popularity of high performance mobile electronic devices such as particularly of smartphones and the like as well as of high-capacity mobile data access contracts such as flat-rate data subscriptions and the like, mobile data traffic has recently been highly increasing. As a consequence, demands to wireless networks such as cellular networks or WiFi networks are also continuously increasing such that frequently capacity problems are occuring.

One example of a situation in which particular high demands to cellular data traffic is involved relates to mobile video-on-demand. Services such as the world wide web movie broadcasting platform YouTube or those offered by local TV channels have become increasingly popular. With the advent of high performance mobile devices such as smartphones, users also want to use these services on their mobile devices, straining cellular networks. Potential local similarities in requests for this content such as computers on the same train all wanting to catch up on last night's episode of a popular TV series or watch the latest viral video can cause performance problems to or even collapse of the according mobile network particularly cellular network.

Another example of such a situation relates to events with large crowds. Some events entail crowds in areas where cellular or other wireless networks are dimensioned for fewer people. Such events include big outdoor sporting events such as marathons, which are spread over a large area, making it hard to deploy extra capacity at a particular location, royal weddings or popular event where large crowds gather but still want to be able to watch the event on their mobile devices. Many in the crowd will have similar interests and request the same data.

In this context, recent work has explored the potential of data offloading from wireless networks of comparably low performance such as out-fashioned cellular networks to modern wireless networks of comparably high performance such as WiFi networks. If data is not time-critical, savings can be had through deferred transmissions and the use of delay tolerant networking techniques [5]. Recent advances in information-centric networking [1] elevate content to a major player in a network and caching of popular content at base stations and in mobile devices or mobile nodes reduces the load on shared access networks, which can often be the bottleneck [3].

So-called offloading techniques can address capacity problems plaguing cellular or other wireless mobile networks [6, 2]. While today data offloading is viewed from theoretical and conceptual perspectives, there is little existing work on supporting these techniques in real networks. Existing cellular and/or other wireless network architectures are usually not sufficiently aware of network and data context to make intelligent offloading decisions.

Therefore, there is a need for an efficiently implementable system for delivering content within a at least partially wireless network being capable of efficiently providing content within existing network infrastructure satisfying user expectations for timely delivery.

US 2009/0088188 A1 relates to a method, mobile communication device and system for a selective downloading to a mobile communication device.

### Disclosure of the Invention

According to the invention this need is settled by a method as it is defined by the features of independent claim 1, by a server as it is defined by the features of independent claim 6, and by a computer program as defined by the features of independent claim 9. Preferred embodiments are subject of the dependent claims.

In particular, the gist of the invention is the following: A method of delivering content via a network from a server to a client having a first network interface comprises: the client providing a request for content to the server via a first vector wherein the first vector is associated to the first network interface; the server receiving context information about the context of the client; the server separating the content to be delivered to the client in accordance with the request into small content and large content; the server defining a transfer procedure for the large content based on the context information; the server providing a first response to the client via the first vector wherein the first response comprises the small content and information about the transfer procedure of the large content; and the client receiving the large content in accordance with the information about the transfer procedure of the large content. The method can particularly be a computer-implemented method.

In the context of the invention, the term "content" relates to information of any form that may provide value for an end-user or audience and that may be requested via a client. Generally, such content can be delivered via any suitable medium such as television, audio or data compact discs as well as live events such as conferences and stage performances. However, in the context of the invention, the content can particularly be delivered via the network which can be or comprise the internet and particularly the world wide web (WWW). For example, the content can be delivered using a markup language such as the hypertext markup language (HTML) possibly including embedded objects or the like. Thus, the content can particularly be one or a plurality of data files. Such content data files can be HTML data files or HTML-frames, image data files, e.g., in the format of the joint photographic experts group (JPG or JPEG) or in the graphics interchange format (GIF), music data files, e.g., in the moving pictures experts groups (MPEG)-1 or MPEG-2 audio layer III format commonly referred to as MP3, movie data files, e.g., in the QuickTime format (MOV), in the MPEG-4 format (MP4) or in the shockwave flash (SWF) format, or embedded program files such as Java applets or the like.

In connection with the content to be delivered to the client, the term "small" as used herein can particularly relate to content being suitably small in size in order that a efficient delivery via the first vector is possible. Small content can, e.g., comprise HTML-frames, news tickers, feeds, low resolution pictures or the like. For example, in networks where at least segments and in particular the first vector are implemented as cellular networks or 3G networks, content can be defined as being small if its size is smaller than about 512 Kilobytes or smaller than about 1 Megabytes (MB) or smaller than about 2 MB or smaller than about 5 MB or smaller than about 10 MB or the like. As counterpart, the term "large" as used herein in connection with content to be delivered can particularly relate to content which possibly can not be delivered via the first vector at a satisfying performance. In particular, large content can be all content which is not small as specified above and can, e.g., comprise music, streaming videos, high resolution pictures and the like.

Server in the context of the invention can relate to a computer being connected to a network via a network interface and providing services to other nodes or devices within the network or being interconnected to the network. The server can be a web server which can particularly relate to computers providing web services via the internet and particularly via the WWW. Such web services can comprise delivery of content via the WWW or providing web applications via the WWW. Client in the context of the invention can particularly relate to a preferably mobile electronic device which intends to receive services over a preferably at least partly wireless network. The first network interface can be adapted to allow connection of the client to a wireless network and particularly to a cellular network such as 3G. For example, clients can be smartphones, personal digital assistants (PDA), multimedia streaming devices, mobile phones, laptop computers, tablet computers, global positioning system (GPS) devices, combinations thereof or the like. The term "request" as used herein relates to any suitable request for delivery of content via the network. For example, such a request can be a HTML-request.

In the context of the invention, the term "vector" can particularly relate to a network technology or in more detail to a path within a specific network technology. For example, a vector can be based on a cellular network such as 3G or the like or a wireless local area network (WLAN) such as WiFi or the like. The term "cellular network" as used herein can particularly relate to radio networks distributed over areas called cells. Thereby, each cell can be served by at least one fixed-location transceiver known as a cell site or base station. This enables a large number of mobile devices or portable transceivers such as, e.g., mobile phones, pagers, laptop computers, tablet computers or the like to communicate anywhere in the network via the base stations even if some of the mobile devices are moving through more than one cell during transmission. The term "3G" as used herein can particularly relate to third generation mobile telecommunications being a generation of standards for mobile phones and mobile telecommunication services fulfilling the International Mobile Telecommunications-2000 (IMT-2000) specifications by the International Telecommunication Union. Within 3G, application services can include wide-area wireless voice telephone, mobile internet access, video calls and mobile TV in mobile environments. Recent 3G releases, e.g., denoted as 3.5G or 3.75G, can also provide mobile broadband access of several Megabits per second to mobile devices. The term "WiFi" as used herein can particularly relate to a mechanism for wirelessly connecting mobile devices such as personal computers, video game consoles, smartphones or digital audio players to the internet via a wireless network access point or hotspot. The term "smartphone" as used herein can particularly relate to a high-end mobile phone which combines various technologies and a mobile phone. Such technologies of electronic devices can, e.g., be portable media players, cameras, internet access applications such as web browsers, GPS navigation, Wi-Fi and mobile broadband access or the like and combinations thereof. The term "context" as used herein can particularly relate to data context and network context of the client. It can comprise information about the client device, its local environment which can ongoingly change while the client is moving and its network links or network interfaces and their availability.

The method according to the invention allows for efficiently offloading content transfers which would negatively affect the performance of a comparably weak network or a segment thereof. In particular, it can allow for offloading large or heavy content from a cellular network. The term "offloading" as used herein can relate to preventing transfer of content via a vector but allowing receiving said content in another way. Thus, the client can be delivered at comparably high performance such that its user can be timely delivered.

By providing information about the context of the client to the server, the method can allow making use of client mobility patterns and predictions to find suitable network resources to be addressed in the transfer procedure of the large content and thereby enable advanced delivery of content. It can particularly allow for providing an efficient framework for using user context and data properties in making offloading decisions. Still further, the method can allow for providing a comparable simple way for developers to prioritize content to show which can be easily offloaded and which is time-critical. It can also allow for a comparably easy implementation.

Within the method according to the invention, a web server architecture can be provided that is aware of the mobility of content consumers and the context of the network and data content. In more detail, this architecture can make it possible to send different pieces of content over different network technologies, enabling offloading of heavy content or high resource consuming content from the cellular networks, in particular if such content is not time critical. The clients or mobile devices can recombine the pieces before providing them to the user. This decoupling of content from user requests can also allow for advanced delivery of content to places where a user will be instead of where the user currently is. In today's highly mobile environment, this pre-caching can take full advantage offloading opportunities.

The method according to the invention can enable context-based data offloading without requiring new software at cell towers and with comparably small changes at clients and servers. This can allow for comparably quick adoption of data offloading and can ease the burden on network programmers. Within the method according to the invention (web) content can be split into two conceptual pieces: large content such as pictures, streaming videos, music etc., and the rest, e.g., of the HTML frame which itself can contain smaller content items such as news tickers, feeds etc.. Also two delivery vectors can be distinguished (see below), such as 3G or any cellular network communication and the content offloading vector which can take many forms, although it can require some local content-cache and can rely on WiFi for its last-hop delivery. In particular, small content can be transferred over 3G and large content can be offloaded when beneficial and eventually within delay constraints. Thereby, active sessions need not be terminated and restarted when switching technologies which can disrupt user experience and can lead to re-transferring partially received pages. Instead, when an alternate delivery vector is available, the server can offload the bulk of communication but still provide a seamless session with minimal 3G usage.

The context information can be received by the server in various manners such as provided by nodes having relevant information about the client and the like. Preferably, the request provided by the client to the server comprises the context information about the context of the client. Thereby, the context information can particularly be part of a HTML-request wherein specific context tags can be used. Such inclusion of the context information into the request allows for an efficient provision of all necessary information from the client to the server.

Preferably, the client comprises a second network interface, the information about the transfer procedure of the large content comprises information about a second vector and the client receives the large content via the second vector wherein the second vector is associated to the second network interface. In particular, the second network interface can be a WLAN interface or a WiFi interface. In such a situation as it is commonly implemented in mobile devices such as smartphones today, data or content delivery can efficiently be offloaded from the comparably low performance first vector, e.g. associated to a cellular network interface, to the comparably high performance second vector, e.g. associated to a WiFi network interface. For the user of the client, the content can appear at comparably high performance or at a suitable time on the client even though the request is provided via the first vector.

Thereby, the server preferably provides the large content to a network node which is reachable by the client via the second vector. Such a network node can, e.g., be an access point, e.g. connected to the server by a wired connection, and wirelessly reachable by the client. It can also be an access point not being reachable by the client when the request is provided but when content is to be delivered. The server can in this case include access point information into the information about the transfer procedure of the large content wherein the movement of the client is estimated and a suitable access point is chosen.

Preferably, the server provides a second response to the client via the second vector comprising the large content. Like this, the client can receive the first response comprising small content via the first vector, e.g. a cellular network, and the second response comprising the large content via the second vector, e.g. a WiFi network.

Another aspect of the invention relates to a server comprising a request processing unit, a context managing unit and a response processing unit, wherein: the request processing unit is arranged to receive a request for content from a client via a first vector, to receive context information about the context of the client and to provide the context information to the context managing unit; the context managing unit is arranged to define a transfer procedure for the large content based on the context information and to provide information about the transfer procedure of the large content to the response processing unit; and the response processing unit comprises predefined separation rules and is arranged to separate the content to be delivered to the client into small content and large content by applying the predefined separation rules and to provide a first response to the client via the first vector comprising the small content and information about the transfer procedure of the large content. As described above, the server can particularly be a computer running a web service and having a network interface connected to a network. Such a server allows for efficiently implementing a system for applying the method described above and achieving the corresponding advantageous effects described above.

Thereby, the request processing unit preferably is arranged to strip the context information from the request of the client. Like this, the server can efficiently separate the context information from the request and processing it. Preferably, the context managing unit is arranged to track the client by means of a client identifier. The client identifier can, e.g., be an internet protocol (IP) address and in particular a cellular network IP address. This allows the server to efficiently coordinate separated processing of context and content in particular also in situations where plural requests are to be processed at the same time.

A further other aspect of the invention relates to a computer program comprising program code means being arranged to implement the features of the server described above when being executed. Such a computer program allows for an efficient and convenient distribution and implementation of the described server.

A further other aspect of the invention relates to a client comprising a request generating unit, a response processing unit and a context acquiring unit, wherein: the context acquiring unit is arranged to acquire context information about the context of the client and to provide the information about the context of the client; the request generating unit is arranged to provide a request for content to a server via a first vector, the request comprising the information about the context of the client; and the response processing unit is arranged to receive a first response from the server via the first vector comprising small content and information about a transfer procedure of large content and to receive the large content in accordance with the information about the transfer procedure of the large content. As described above, the client can particularly be a mobile device such as a smartphone or the like. Such a client allows for efficiently implementing a system for applying the method described above and achieving the corresponding advantageous effects described above.

Preferably, the request generating unit is implemented as a plugin component of a browser program. With such a plugin component the client can efficiently be implemented wherein standard web technologies already present in the browser program can be used.

A further other aspect of the invention relates to a computer program comprising program code means being arranged to implement the features of the client described above when being executed. Such a computer program allows for an efficient and convenient distribution and implementation of the described client.

A further aspect of the present disclosure relates to a system comprising a client as described above and a client as described above. Independent from this system, the client and the server can be correspondingly arranged such that together they fully apply and implement the method according to the invention.

These and other aspects of the invention will be apparent from and elucidated with reference to the embodiment(s) described hereinafter.

### Brief Description of the Drawings

The method, the server, the client and the computer programs according to the invention are described in more detail hereinbelow by way of exemplary embodiments and with reference to the attached drawings, in which:
- Fig. 1: shows a general architecture for implementing an embodiment of the method according to the invention with an embodiment of a server according to the invention and an embodiment of a client according to the invention;
- Fig. 2: shows a server architecture of an embodiment of the server according to othe invention;
- Fig. 3: shows latency results with their standard deviation for to different WiFi access points from a first experiment of an embodiment of the invention;
- Fig. 4: shows 3G bandwith usage during regular operation compared to operation including data offloading from a second experiment of an embodiment of the invention; and
- Fig. 5: shows 3G usage over time from a third experiment of an embodiment of the invention.

### Mode(s) for Carrying Out the Invention

Modern web architectures often consist of a high-performance web server, e.g. written in C/C++, with web applications, e.g., often written in object-oriented languages such as Python or the like. The architecture described herein as an embodiment of the invention places a light-weight middleware layer between these components on the server to allow for expressive content offloading based on user and data context. No additional software is needed at the cell towers and web developers need not to contend with an unfamiliar and complex new system.

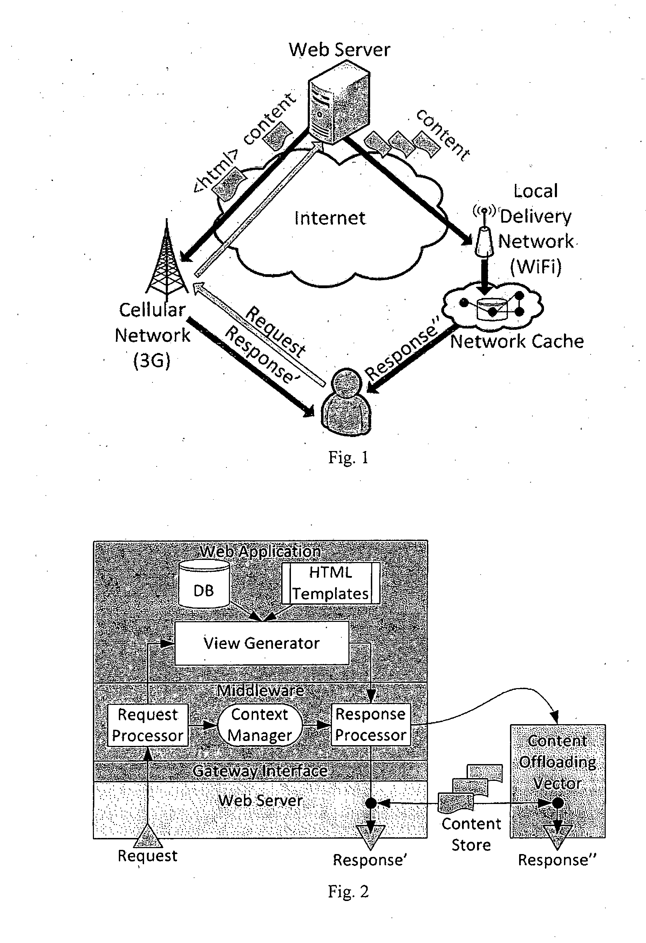

Fig. 1 shows the high-level architecture. Client requests are sent over 3G, although large requests like file uploads could also be offloaded. The server response is split into Response' and Response" to be sent over 3G as first vector and the offloading vector as second vector, respectively. Response' contains HTML frames to be served in the common way with the content tags re-written to point to future offloaded locations. Response" contains the large content with its meta-data.

With respect to acquiring and using context for data offloading, there are two key issues: i) what context to acquire and ii) how to distribute and respond to context. There are many mechanisms for sensing, storing, and aggregating context known in the art but the key question asks what types of context information are particularly useful for this scenario. For example, when a network cache relies on opportunistic node contacts, context may include knowledge about contact patterns such as duration of contacts or number of unique contacts. Alternatively, when applications attempt to use offloading to benefit from multiple users requesting the same content, context may include aggregate activities of local groups of nodes. To enable a node or client to acquire its context, it is relied on existing services and techniques [6, 7] that can acquire information about a device, its local environment and its network links. To enable clients to acquire aggregate context information, it is relied on recent work in assessing the context of a dynamic group [4] that can reason about similarities among users, the network neighborhood, and social graphs.

Basically, it is up to the client to determine which context to acquire and share with the server. This depends on the client's context acquisition capabilities and the requirements of a request. As in all similar uses of context, the client and server must agree a priori on the language used to describe context. The context that a user acquires about his situation must be sent to the web server to enable intelligent data offloading. A client's context can be piggybacked on the client's request. The architecture in accordance with the invention leverages existing approaches for succinctly summarizing context [4] to prevent the transmission of context from overburdening 3G connections. Aggregated context information about a group of nodes or clients can be similarly shared. Alternatively, context can be shared through the network cache and back to the server through the reverse of the process of delivering Response'.

In the architecture of the embodiment of the invention, time-critical content is delivered in the traditional manner across the cellular network as first vector, but other content can selectively be pushed across an alternative mechanism, i.e. the content offloading or second vector. This alternative can be based on delay-tolerant networking principles that allow for asynchronous, opportunistic communication.

Fig. 2 shows a server-side architecture having three main components: a request processor, a context manager and a response processor. These three components are arranged in a middleware layer directly below a web application. The client inserts its context into its HTML requests. The request processor looks for specific context tags, strips them from the request, and sends the context information to the context manager, which tracks each user by his 3G IP address. Otherwise, requests proceed as commonly known, with no changes required to the web application itself. Once the HTML response is generated, the response processor rewrites the response according to pre-defined rules and the user context provided by the context manager, possibly removing some of the content and content links and sending that data over the offloading delivery vector as second vector.

As an example of operation the following two content items can be considered:
1. <a href=\http://server-location.url/media/largeVideoFile.flv" id=embedStreamPlayer>
2. <a href \http://server-location.url/images/largeImageFile.jpg">

Normally, both content items would be served by the web server over the 3G network. The response processor can rewrite the above in a response to:
1. <a href=\http://localhost/tmp-cache/largeVideoFile.flv" id= embedLocalStreamPlayer>
2. <a href=\http://localhost/tmp-cache/largeImageFile.jpg''>
3. < LOOKUP CONTENT \dtn://*/largeImageFile.jpg", \dtn://*/largeVideoFile.flv" USING DTN BPQ>

Thus the large VideoFile and largeImageFile urls now point to a local cache, and the embedded video player changed to a local streaming service. The client looks for both content items in the local DTN network cache using the BPQ extension, and, once the content arrives, the client can stream the video from its own local cache.

With regard to client-side architecture, clients must provide context to the server. For that purposes the clients comprise two elements: a context aggregato and a browser plugin. The context aggregator enumerates available resources and services, tracks offloading delivery vector availability and calculates future offloading possibilities. The resulting context is then sent to the servers via the browser plugin that automatically detects servers that have data offloading capabilities and inserts context information from the context aggregator into HTTP requests. More centralized context aggregation and processing might be desired, for example provided by the cellular carriers. The architecture of the embodiment of the invention can still be valid since such context can easily be sent to the clients which can then send it on to the servers. Data privacy is a natural advantage of client-controlled context, i.e. the user retains full control over what context he shares and with whom.

In a possible implementation also underlying the examples described below, for the web server and interface Apache is used since it is the open-source standard for deployment web servers and interfaced with web application using Python Web Server Gateway Interface (WSGI). The middleware layer and context manager is implemented in the Django Web Framework. In the implementation of the context manager, the client encodes three pieces of context in each HTTP request: Offload?, DestIPAddr, DTNEndpointID.

When the context manager on the client determines that mobile advanced delivery of content is beneficial, it asks the server to start offloading the content and provides a destination IP address where the content should be sent. This need only be a destination running a bundle protocol router that can accept and forward bundles, and can thus act as an in-network content cache. The client also provides its globally unique bundle protocol endpoint identifier. The server encapsulates the requested content items in their own bundle, which is addressed to the client's DTNEndpointlD and forwarded over the Internet to the provided IPAddr. Once the bundle is transferred to the destination, hop-to-hop opportunistic routing will deliver the content.

For the web application, a fully-functional social networking website built in the Pinax rapid web application development framework is used with a MySQL database back-end and static file system for the content (pictures, video, etc.). For the content offloading service the DTN2 reference implementation of the Bundle Protocol is used to implement the data offloading delivery vector. This allows to address content independent of a user's current IP address (instead using its globally unique endpoint ID) and to pre-cache content in places where a node might visit as long as there is at least one host there who implements the bundle protocol and can accept and forward bundles. If there is a network of such nodes, then content is disseminated to all nodes according to the DTN2 forwarding rules. When the user eventually comes into contact with a node caching its content, the content is delivered.

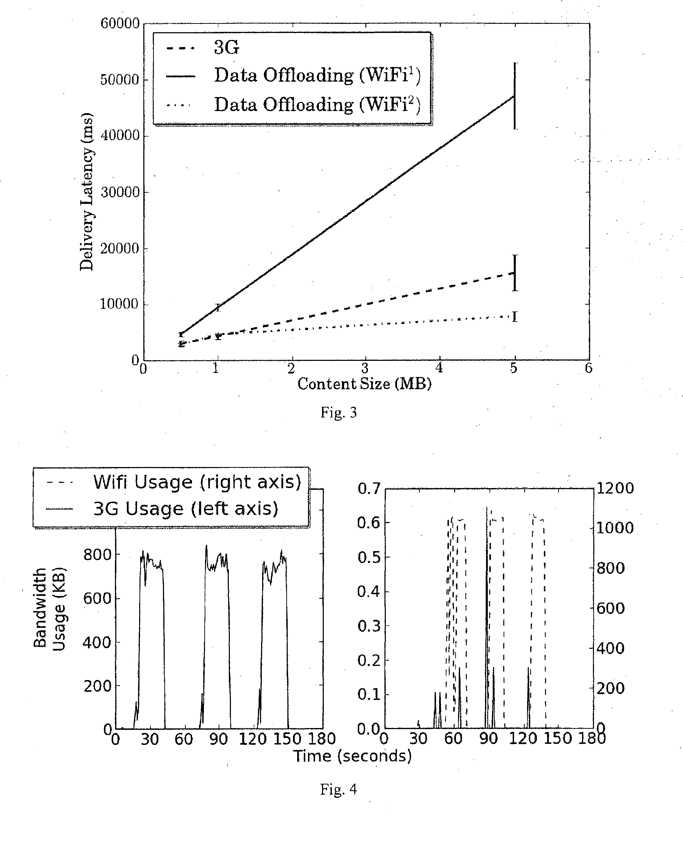

In the following a first experiment regarding 3G-only versus data offloading is described by means of Fig. 3. Thereby, content offloading not only frees expensive cellular bandwidth, it can deliver content faster even without pre-caching. In this first experiment, 50 requests are issued for three different web pages with minimal HTML frames containing images of sizes 512 Kilobytes, 1 MB and 5 MB. The client is a linux-based laptop with a USB 3G Modem and WiFi card located in Europe, and the server is located in the central United States. The average delivery latency is measured using only 3G connectivity and with content offloading using bundle protocol based offloading vector. The last hop link is over 802.11b via a WiFi access point. Fig. 3 shows the latency results with their standard deviation for two different WiFi access points, one with relatively poor signal strength and many users and one with good signal strength and comparably few users. WiFi is not necessarily faster than 3G [2], although this strengthens the argument for user context-based data offloading: if the cellular connection is currently expensive (e.g., the user is roaming), the extra latency may well be worth money saved. Conversely, if the data is of high priority, using 3G (depending on the available WiFi bandwidth) may be better.

The second experiment relates to 3G bandwidth savings. Fig. 4 shows the 3G bandwidth usage during regular operation and with data offloading. The client makes three requests for a page containing a 16 MB video file. In the 3G-only case, the video is streamed. In the data-offloading case, the video is bundled and sent to the client using our DTN2 content delivery vector. The final hop is over 802.11 g from a WiFi access point. The client receives the bundle, inserts it into its local cache, and the video is streamed locally. As the results show, the 3G savings are significant, i.e. three orders of magnitude. Furthermore, the latency of the WiFi connection setup and bundle protocol client registration handshake is only a few seconds and is not detrimental to the user experience. The local video file stream can be started as soon as the video file starts arriving on the client. There is no need to wait for the whole file to arrive in order to start streaming from the file descriptor. The combined request-to-video-start latency is thus only a few seconds more than when using only 3G.

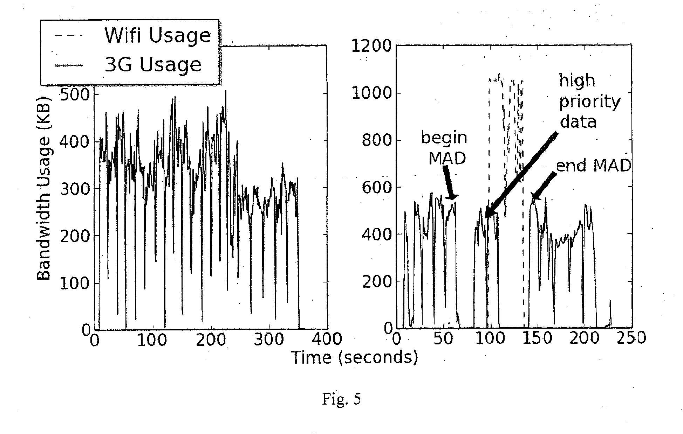

The third experiment 3 relates to benefits of advanced delivery. The implementation also enables mobile advanced delivery of content. If the client's context manager determines that a node is about to connect to a content cache, it can request that current and future content requests be serviced by the cache instead of downloaded over 3G. Fig. 5 shows the results of an experiment in which a user makes 20 independent requests for web pages each including a 5 MB content item. The left-hand graph plots the 3G usage over time if the content is requested and delivered via 3G only. The right hand plot shows a scenario where after the first five requests, the user determines that it will soon connect to a mobile advanced delivery cache implemented by DTN2, at which point all content should be forwarded to the cache. The server responds to two of the requests over 3G regardless because the data is high priority according to its meta-data tags. The rest is forwarded to the content-cache and served to the client when it connects over 802.11b. When the client disconnects from the content cache, it sends a context update, and the remaining five requests are serviced over 3G. In this experiment, the user context was predetermined and provided ahead of the experiment. Not only does the described architecture save 3G bandwidth, in this case reducing the 3G load from 108 MB to 60.7 MB given only a 51 second connection to a content-cache, but it is able to deliver all twenty content items in almost half the time.

While the invention has been illustrated and described in detail in the drawings and foregoing description, such illustration and description are to be considered illustrative or exemplary and not restrictive. It will be understood that changes and modifications may be made by those of ordinary skill within the scope of the following claims. In particular, the present invention covers further embodiments with any combination of features from different embodiments described above and below.

The invention also covers all further features shown in the Figs. individually although they may not have been described in the afore or following description. Also, single alternatives of the embodiments described in the figures and the description and single alternatives of features thereof can be disclaimed from the subject matter of the invention.

Furthermore, in the claims the word "comprising" does not exclude other elements or steps, and the indefinite article "a" or "an" does not exclude a plurality. A single unit or step may fulfil the functions of several features recited in the claims. The terms "essentially", "about", "approximately" and the like in connection with an attribute or a value particularly also define exactly the attribute or exactly the value, respectively. The term "about" in the context of a given numerate value or range refers to a value or range that is, e.g., within 20%, within 10%, within 5%, or within 2% of the given value or range. A computer program may be stored/distributed on a suitable medium, such as an optical storage medium or a solid-state medium supplied together with or as part of other hardware, but may also be distributed in other forms, such as via the Internet or other wired or wireless telecommunication systems. In particular, e.g., a computer program can be a computer program product stored on a computer readable medium which computer program product can have computer executable program code adapted to be executed to implement a specific method such as the method according to the invention. Any reference signs in the claims should not be construed as limiting the scope.

### Referenced Publications

[1] B. Ahlgren and V. Vercellone. Networking of information an information-centric approach to the network of the future. In ETSI Future Network Technologies Workshop, Mar. 2010.
[2] A. Balasubramanian, R. Mahajan, and A. Venkataramani. Augmenting mobile 3g using wifi. In Proceedings of the 8th international conference on Mobile systems, applications, and services, 2010.
[3] D. Giustiniano, E. Goma, A. Lopez Toledo, 1. Dangereld, J. Morillo, and P. Rodriguez. Fair wlan backhaul aggregation. In Proc. of MobiCom, 2010.
[4] C. Julien. The context of coordinating groups in dynamic mobile networks. In Proc. of COORDINATION, 2011.
[5] A. Nicholson and B. Noble. BreadCrumbs: Forecasting mobile connectivity. In Proc. of MobiCom, 2008.
[6] A. Petz, T. Jun, N. Roy, C.-L. Fok, and C. Julien. Passive network-awareness for dynamic resource-constrained networks. In Proc. of DAIS, 2011.
[7] A. Rahmati and L. Zhong. Context-for-wireless: context-sensitive energy-efficient wireless data transfer. In Proceedings of the 5th international conference on Mobile systems, applications and services, 2007.

## Claims

1. Method of delivering content via a network from a server to a client having a first network interface, comprising
the client providing a request for content to the server via a first vector wherein the first vector relates to a path within a specific network technology and is associated to the first network interface;
the server receiving context information about the context of the client wherein the context information comprises information about the client device, its local environment which can ongoingly change while the client is moving and its network links or network interfaces and their availability;
the server separating the content to be delivered to the client in accordance with the request into small content and large content;
the server defining a transfer procedure for the large content based on the context information;
the server providing a first response to the client via the first vector wherein the first response comprises the small content and information about the transfer procedure of the large content; and
the client receiving the large content in accordance with the information about the transfer procedure of the large content.

2. The method of claim 1, wherein the request provided by the client to the server comprises the context information about the context of the client.

3. The method of claim 1 or 2, wherein the client comprises a second network interface, the information about the transfer procedure of the large content comprises information about a second vector and the client receives the large content via the second vector wherein the second vector is associated to the second network interface.

4. The method of claim 3, wherein the server provides the large content to a network node which is reachable by the client via the second vector.

5. The method of claim 3 or 4, wherein the server provides a second response to the client via the second vector comprising the large content.

6. Server comprising a request processing unit, a context managing unit and a response processing unit, wherein
the request processing unit is arranged to receive a request for content from a client via a first vector wherein the first vector relates to a path within a specific technology, to receive context information about the context of the client and to provide the context information to the context managing unit wherein the context information comprises information about the client device, its local environment which can ongoingly change while the client is moving and its network links or network interfaces and their availability;
the context managing unit is arranged to define a transfer procedure for the large content based on the context information and to provide information about the transfer procedure of the large content to the response processing unit; and
the response processing unit comprises predefined separation rules and is arranged to separate the content to be delivered to the client into small content and large content by applying the predefined separation rules and to provide a first response to the client via the first vector comprising the small content and information about the transfer procedure of the large content.

7. The server of claim 6, wherein the request processing unit is arranged to strip the context information from the request of the client.

8. The server of claim 6 or 7, wherein the context managing unit is arranged to track the client by means of a client identifier.

9. Computer program comprising program code means being arranged to implement the features of the server according to any one of claims 6 to 8 when being executed.

## Patentansprüche

1. Verfahren zum Liefern von Inhalt von einem Server an einen Kunden über ein Netzwerk mit einer ersten Netzwerkschnittstelle, wobei
der Kunde über einen ersten Vektor eine Inhaltsabfrage an den Server stellt, wobei sich der erste Vektor auf einen Pfad innerhalb einer speziellen Netzwerktechnologie bezieht und der ersten Netzwerkschnittstelle zugewiesen ist;
der Server Kontextinformationen über den Kundenkontext erhält, wobei die Kontextinformationen Informationen über das Gerät des Kunden, dessen örtliche Umgebung, die sich, während der Kunde sich bewegt, permanent ändern kann, und dessen Netzanbindungen oder Netzwerkschnittstellen sowie deren Verfügbarkeit umfassen;
der Server den an den Kunden zu liefernden Inhalt gemäß der Abfrage in kleinen und großen Inhalt aufteilt;
der Server auf Grundlage der Kontextinformationen ein Übermittlungsverfahren für den großen Inhalt definiert;
der Server dem Kunden über den ersten Vektor eine erste Antwort übermittelt, wobei die erste Antwort den kleinen Inhalt und Informationen zum Übermittlungsverfahren des großen Inhalts umfasst; und
der Kunde den großen Inhalt gemäß den Informationen zum Übermittlungsverfahren des großen Inhalts empfängt.

2. Verfahren nach Anspruch 1, wobei die vom Kunden an den Server gestellte Abfrage die Kontextinformationen über den Kundenkontext umfasst.

3. Verfahren nach Anspruch 1 oder 2, wobei der Kunde eine zweite Netzwerkschnittstelle aufweist, die Informationen zum Übermittlungsverfahren des großen Inhalts Informationen über einen zweiten Vektor umfassen und der Kunde den großen Inhalt über den zweiten Vektor empfängt, wobei der zweite Vektor der zweiten Netzwerkschnittstelle zugewiesen ist.

4. Verfahren nach Anspruch 3, wobei der Server den großen Inhalt einem Netzwerkknoten zuführt, auf den der Kunde über den zweiten Vektor Zugriff hat.

5. Verfahren nach Anspruch 3 oder 4, wobei der Server dem Kunden über den zweiten Vektor, der den großen Inhalt umfasst, eine zweite Antwort zukommen lässt.

6. Server mit einer Abfrageverarbeitungseinrichtung, einer Kontextverwaltungseinrichtung und einer Antwortverarbeitungseinrichtung, wobei die Antwortverarbeitungseinrichtung dazu ausgebildet ist, eine Inhaltsabfrage eines Kunden über einen ersten Vektor zu empfangen, wobei sich der erste Vektor auf einen Pfad innerhalb einer speziellen Technologie bezieht, Kontextinformationen über den Kundenkontext zu empfangen und die Kontextinformationen der Kontextverwaltungseinrichtung zuzuführen, wobei die Kontextinformationen Informationen über das Gerät des Kunden, dessen örtliche Umgebung, die sich, während der Kunde sich bewegt, permanent ändern kann, und dessen Netzanbindungen oder Netzwerkschnittstellen sowie deren Verfügbarkeit umfassen;
die Kontextverwaltungseinrichtung dazu ausgebildet ist, auf Grundlage der Kontextinformationen ein Übermittlungsverfahren für den großen Inhalt zu definieren und der Antwortverarbeitungseinrichtung Informationen über das Übermittlungsverfahren des großen Inhalts zukommen zu lassen; und
die Antwortverarbeitungseinrichtung vordefinierte Aufteilungsregeln umfasst und dazu ausgebildet ist, den an den Kunden zu lieferenden Inhalt unter Anwendung der vordefinierten Aufteilungsregeln in kleinen und großen Inhalt aufzuteilen und dem Kunden über den ersten Vektor, der den kleinen Inhalt und Informationen zum Übermittlungsverfahren des großen Inhalts umfasst, eine erste Antwort zukommen zu lassen.

7. Server nach Anspruch 6, wobei die Antwortverarbeitungseinrichtung dazu ausgebildet ist, die Kontextinformationen von der Kundenabfrage zu trennen.

8. Server nach Anspruch 6 oder 7, wobei die Kontextverwaltungseinrichtung dazu ausgebildet ist, den Kunden mit Hilfe einer Kundenkennung zu verfolgen.

9. Computerprogramm mit einer Programmcodeeinrichtung, die dazu ausgebildet ist, bei der Ausführung die Merkmale des Servers nach einem der Ansprüche 6 bis 8 durchzuführen.

## Revendications

1. Procédé de communication d'un contenu par l'intermédiaire d'un réseau, d'un serveur à un client pourvu d'une première interface de réseau, comprenant l'émission par le client d'une demande de contenu à un serveur par l'intermédiaire d'un premier vecteur, ledit premier vecteur se rapportant à un chemin à l'intérieur d'une technologie de réseau spécifique et étant associé à la première interface de réseau ;
la réception par le serveur d'informations de contexte relatives au contexte du client, lesdites informations de contexte comprenant des informations sur le dispositif client, son environnement local pouvant changer de manière continue pendant le déplacement du client, et ses lignes de réseau ou interfaces de réseau ainsi que leur disponibilité ;
la séparation par le serveur du contenu à communiquer au client en contenu de petite taille et contenu de grande taille, en fonction de la demande ;
la définition par le serveur d'une procédure de transfert pour le contenu de grande taille sur la base des informations de contexte ;
l'émission par le serveur d'une première réponse au client par l'intermédiaire du premier vecteur, ladite première réponse comprenant le contenu de petite taille et les informations relatives à la procédure de transfert du contenu de grande taille ; et
la réception par le client du contenu de grande taille en fonction des informations relatives à la procédure de transfert du contenu de grande taille.

2. Procédé selon la revendication 1, où la demande émise par le client au serveur comprend les informations de contexte relatives au contexte du client.

3. Procédé selon la revendication 1 ou la revendication 2, où le client comprend une deuxième interface de réseau, les informations relatives à la procédure de transfert du contenu de grande taille comprennent des informations sur un deuxième vecteur, et où le client reçoit le contenu de grande taille par l'intermédiaire du deuxième vecteur, le deuxième vecteur étant associé à la deuxième interface de réseau.

4. Procédé selon la revendication 3, où le serveur communique le contenu de grande taille à un noeud de réseau pouvant être atteint par le client par l'intermédiaire du deuxième vecteur.

5. Procédé selon la revendication 3 ou la revendication 4, où le serveur émet une deuxième réponse au client par l'intermédiaire du deuxième vecteur comprenant le contenu de grande taille.

6. Serveur, comprenant une unité de traitement de demande, une unité de gestion de contexte et une unité de traitement de réponse, où
l'unité de traitement de demande est prévue pour recevoir une demande de contenu d'un client par l'intermédiaire d'un premier vecteur, ledit premier vecteur se rapportant à un chemin à l'intérieur d'un technologie spécifique, afin de recevoir des informations de contexte relatives au contexte du client et de communiquer les informations de contexte à l'unité de gestion de contexte, les informations de contexte comprenant des informations sur le dispositif client, son environnement local pouvant changer de manière continue pendant le déplacement du client, et ses lignes de réseau ou interfaces de réseau ainsi que leur disponibilité ;
l'unité de gestion de contexte est prévue pour définir une procédure de transfert pour le contenu de grande taille sur la base des informations de contexte, et pour communiquer des informations relatives à la procédure de transfert du contenu de grande taille à l'unité de traitement de réponse ; et
l'unité de traitement de réponse comprend des règles de séparation définies et est prévue pour séparer le contenu à communiquer au client en contenu de petite taille et contenu de grande taille par application des règles de séparation définies, et pour émettre une première réponse au client par l'intermédiaire du premier vecteur comprenant le contenu de petite taille et les informations relatives à la procédure de transfert du contenu de grande taille.

7. Serveur selon la revendication 6, où l'unité de traitement de demande est prévue pour retirer les informations de contexte de la demande du client.

8. Serveur selon la revendication 6 ou la revendication 7, où l'unité de gestion de contexte est prévue pour suivre le client au moyen d'un identifiant de client.

9. Programme informatique comprenant des moyens de code programme prévus pour implémenter les fonctionnalités du serveur selon l'une des revendications 6 à 8 quand ils sont exécutés.
